(19) Europäisches Patentamt / European Patent Office / Office européen des brevets

(11) **EP 3 797 286 B1**

(12) **FASCICULE DE BREVET EUROPEEN**

(45) Date de publication et mention de la délivrance du brevet:
**27.05.2026 Bulletin 2026/22**

(21) Numéro de dépôt: **19724518.6**

(22) Date de dépôt: **21.05.2019**

(51) Classification Internationale des Brevets (IPC):
**G01N 24/08** (2006.01)

(52) Classification Coopérative des Brevets (CPC):
**G01N 24/08**

(86) Numéro de dépôt international:
**PCT/EP2019/063040**

(87) Numéro de publication internationale:
**WO 2019/224169 (28.11.2019 Gazette 2019/48)**

(54) **PROCÉDÉ DE CONTRÔLE NON-DESTRUCTIF DE GAINE ISOLANTE ÉLASTOMÈRE DE CÂBLE, DISPOSITIF ET PROGRAMME**

VERFAHREN ZUR ZERSTÖRUNGSFREIEN PRÜFUNG EINER ELASTOMEREN KABELISOLIERHÜLLE, VORRICHTUNG UND PROGRAMM

METHOD FOR THE NON-DESTRUCTIVE TESTING OF AN ELASTOMER CABLE INSULATION SHEATH, DEVICE AND PROGRAMME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.05.2018 FR 1854323**

(43) Date de publication de la demande:
**31.03.2021 Bulletin 2021/13**

(73) Titulaire: **Electricité de France**
**75008 Paris (FR)**

(72) Inventeurs:
• **BEN HASSINE, Mouna**
**77210 AVON (FR)**
• **MARQUE, Grégory**
**77300 FONTAINEBLEAU (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
• **KAY SAALW◆CHTER ET AL: "Chain Order and Cross-Link Density of Elastomers As Investigated by Proton Multiple-Quantum NMR", MACROMOLECULES, vol. 38, no. 23, 11 October 2005 (2005-10-11), US, pages 9650 - 9660, XP055553094, ISSN: 0024-9297, DOI: 10.1021/ma051238g**
• **PIERRE PUBELLIER ET AL: "Influence de charges micrométriques sur le vieillissement de composites à matrice polymère", 28 November 2017 (2017-11-28), XP055611028, Retrieved from the Internet <URL:http://www.icmpe.cnrs.fr/IMG/pdf/resume_these_p_pubellier.pdf> [retrieved on 20190805]**
• **ANONYMOUS: "Index of /IMG/pdf", 5 August 2019 (2019-08-05), XP055611029, Retrieved from the Internet <URL:http://www.icmpe.cnrs.fr/IMG/pdf/> [retrieved on 20190805]**
• **BRICE GABRIELLE ET AL: "Thermal Aging of Interfacial Polymer Chains in Ethylene-Propylene-Diene Terpolymer/Aluminum Hydroxide Composites: Solid-State NMR Study", JOURNAL OF PHYSICAL CHEMISTRY PART B: CONDENSED MATTER, MATERIALS, SURFACES, INTERFACES & BIOPHYSICAL, vol. 115, no. 43, 26 September 2011 (2011-09-26), US, pages 12392 - 12400, XP055553025, ISSN: 1520-6106, DOI: 10.1021/jp207084j**

• M. BEN HASSINE ET AL: "Time to failure prediction in rubber components subjected to thermal ageing: A combined approach based upon the intrinsic defect concept and the fracture mechanics", MECHANICS OF MATERIALS, vol. 79, 1 August 2014 (2014-08-01), NL, pages 15 - 24, XP055552956, ISSN: 0167-6636, DOI: 10.1016/j.mechmat.2014.07.015

• BRICE GABRIELLE ET AL: "Probing Rubber Cross-Linking Generation of Industrial Polymer Networks at Nanometer Scale", JOURNAL OF PHYSICAL CHEMISTRY PART B: CONDENSED MATTER, MATERIALS, SURFACES, INTERFACES & BIOPHYSICAL, vol. 120, no. 24, 2 June 2016 (2016-06-02), US, pages 5581 - 5589, XP055553075, ISSN: 1520-6106, DOI: 10.1021/acs.jpcb.6b03601

• GILLEN K T ET AL: "Condition monitoring methods applied to degradation of chlorosulfonated polyethylene cable jacketing materials", POLYMER DEGRADATION AND STABILITY, BARKING, GB, vol. 91, no. 6, 1 June 2006 (2006-06-01), pages 1273 - 1288, XP027949535, ISSN: 0141-3910, [retrieved on 20060601]

• DOUGLAS J HARRIS ET AL: "1HT2-NMR monitoring of crosslinked polyolefin aging", JOURNAL OF APPLIED POLYMER SCIENCE, 25 September 2003 (2003-09-25), pages 2578 - 2582, XP055552931, Retrieved from the Internet <URL:https://epo.summon.serialssolutions.com/2.0.0/link/0/eLvHCXMwtV3NS8MwFH84vehB_AK_CeJFRrBNt649ytDuosjoQU-lrSkMtm6UefC_972-fkR32DxlIZSQNKS_5L2XvC-AW5XaSuvYkp7zoWRP6b5MaC0ncYzcTg9c9uJ_H_bCYDAOKFtDbava1v0r0liHWJPn7B_Qbj6KFfiOmGOJqGO5Ee72KFTy5XncnZW7taismktuSNpaFDAX8-nXfKqzSd4tcxStEVBfsfIMFzUZaGIWUUxMIbz> [retrieved on 20190206], DOI: 10.1002/app.12872

• CORNELISSEN C ET AL: "Ultrasonic and nuclear magnetic resonance for non-destructive diagnostics of cable systems", PROCEEDINGS OF THE 7TH. INTERNATIONAL CONFERENCE ON PROPERTIES AND APPLICATIONS OF DIELECTRIC MATERIALS. NAGOYA, JAPAN, JUNE 1 - 5, 2003; [PROCEEDINGS OF THE INTERNATIONAL CONFERENCE ON PROPERTIES AND APPLICATIONS OF DIELECTRIC MATERIALS], NEW YORK,, vol. 1, 1 June 2003 (2003-06-01), pages 88 - 91, XP010648959, ISBN: 978-0-7803-7725-7

**Description**

L'invention concerne un procédé de contrôle de gaines isolantes de câbles, notamment de câbles nucléaires.

Un domaine d'application de l'invention concerne les câbles électriques de centrales nucléaires de production d'électricité.

Dans les centrales nucléaires de production d'électricité, en moyenne 1500 km de câbles (dont 50 Km dans le bâtiment réacteur) sont installés par tranche nucléaire. En service, les câbles installés subissent un phénomène de vieillissement, c'est-à-dire une dégradation.

La compréhension et le suivi de cette dégradation est indispensable pour assurer le bon fonctionnement de ces câbles.

L'état de vieillissement d'un câble nucléaire est déterminé à partir de la valeur d'allongement à rupture de son isolant. Cette caractéristique est mesurée en laboratoire par un essai mécanique de traction uni-axiale qui est un essai destructif nécessitant le prélèvement d'au moins 50 cm de câble entier. Ainsi, des campagnes de prélèvement de câbles sur site sont périodiquement programmées, puis ces câbles sont analysés en laboratoire ce qui permet d'argumenter quant à leur fin de vie.

L'inconvénient de ce type de contrôle nécessitant un prélèvement de câbles, est avant tout sa nature destructive. Autrement dit, le câble prélevé n'est pas remis en service et son remplacement implique un coût important.

Le document d'une page de résumé, publiée le 28 novembre 2017, de la thèse Pubellier et al. : « Influence de charges micrométriques sur le vieillissement de composites à matrice polymère », décrit un procédé de contrôle d'une gaine isolante en un matériau d'au moins un polymère élastomère d'un câble, comportant une étape de mesure par résonance magnétique nucléaire sur la gaine isolante pour mesurer au moins un premier paramètre caractérisant les chaînes élastiquement actives du réseau macromoléculaire du polymère élastomère.

Le document Brice Gabrielle et al. : « Thermal Aging of Interfacial Polymer Chains in Ethylene-Propylene-Diene Terpolymer/Aluminum Hydroxide Composites: Solid-State NMR Study », JOURNAL OF PHYSICAL CHEMISTRY PART B: CONDENSED MATTER, MATERIALS, SURFACES, INTERFACES & BIOPHYSICAL, 26 septembre 2011, vol. 115, no. 43, ISSN 1520-6106, pages 12392 - 12400, décrit un procédé de contrôle non destructif d'une gaine de câble en EPDM, avec une décomposition du signal de relaxation transverse, mesuré par RMN de protons, en deux composantes exponentielles, à savoir :

- une composante exponentielle $A_S$ à décroissance rapide, attribuée aux portions de chaîne contraintes à leurs deux extrémités par des contraintes topologiques,
- une composante exponentielle $A_L$ à décroissance plus lente, attribuée à des portions de chaînes ayant une seule extrémité libre.

Le document BEN HASSINE ET AL : "Time to failure prediction in rubber components subjected to thermal ageing: A combined approach based upon the intrinsic defect concept and the fracture mechanics", MECHANICS OF MATERIALS, vol. 79, 1er août 2014, ISSN 0167-6636, pages 15 - 24, décrit une mesure de la masse molaire des chaînes élastiquement actives pour de l'EPDM pouvant être utilisé comme isolation électrique.

Le document BRICE GABRIELLE ET AL : "Probing Rubber Cross-Linking Generation of Industrial Polymer Networks at Nanometer Scale", JOURNAL OF PHYSICAL CHEMISTRY, part B, vol. 120, no. 24, 2 juin 2016, ISSN 1520-6106, pages 5581 - 5589, décrit un procédé de mesure par RMN de protons à double quanta.

Le document GILLEN K T ET AL : "Condition monitoring methods applied to degradation of chlorosulfonated polyethylene cable jacketing materials", POLYMER DEGRADATION AND STABILITY, vol. 91, no. 6, 2006, ISSN 0141-3910, pages 1273 - 1288, décrit un procédé de contrôle de la gaine en CSPE d'un câble électrique.

L'invention vise à obtenir un procédé de contrôle non destructif (ne nécessitant pas de remplacement de câble) permettant de conclure sur la durabilité de câbles.

A cet effet, un premier objet de l'invention est un procédé de contrôle suivant la revendication 1.

Les revendications 2 à 7 concernent des modes de réalisation de ce procédé.

Un deuxième objet de l'invention est un programme d'ordinateur suivant la revendication 8, comportant des instructions de code pour la mise en œuvre de l'étape d'évaluation du procédé tel que décrit ci-dessus, lorsqu'il est mis en œuvre sur un calculateur.

Un troisième objet de l'invention est un dispositif de contrôle suivant la revendication 9.

Les revendications 10 à 12 concernent des modes de réalisation de ce dispositif.

L'invention sera mieux comprise à la lecture de la description qui va suivre, donnée uniquement à titre d'exemple non limitatif en référence aux dessins annexés, sur lesquels :

- les figures 1 et 2 représentent schématiquement un réseau moléculaire d'un élastomère d'une gaine de câble,
- la figure 3 représente schématiquement un signal de relaxation transverse pour un réseau élastomère d'une gaine de câble, pouvant être utilisé suivant un mode de réalisation de l'invention,

- la figure 4 représente schématiquement un synoptique modulaire du procédé de contrôle non destructif suivant un mode de réalisation de l'invention.

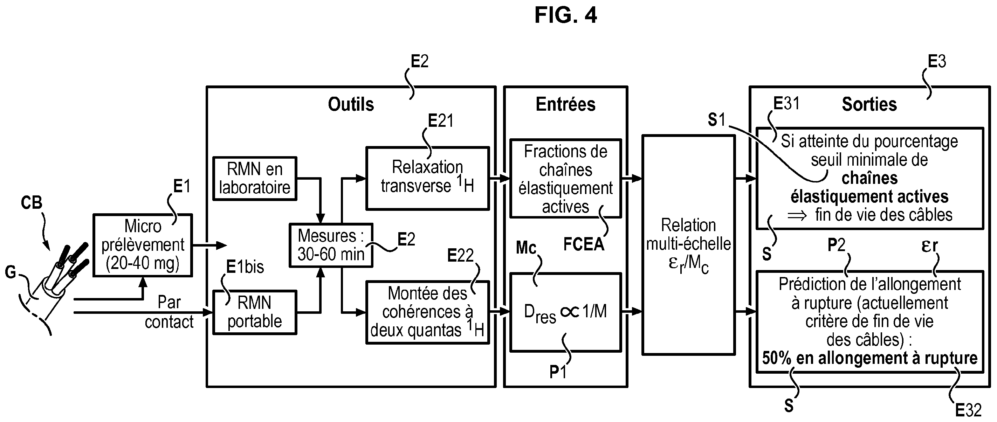

Est décrit ci-dessous, en référence à la figure 4, le procédé de contrôle non-destructif d'une gaine isolante G d'un câble CB, suivant des modes de réalisation de l'invention. La gaine isolante G du câble CB est en un matériau isolant de l'électricité, qui comporte au moins un polymère élastomère. Ce matériau peut être par exemple en EPDM ou autres. Le câble CB peut être par exemple un câble électrique ou autres, disposé dans une centrale nucléaire de production d'électricité. Ainsi que cela est représenté à la figure 4, dans une telle centrale nucléaire, le câble CB et sa gaine isolante G peuvent être soumis à de fortes contraintes, notamment à des radiations ionisantes pouvant être de 0,1 Gy.h$^{-1}$ (h désignant une heure) et à des températures pouvant être de 50°C, pouvant conduire à un vieillissement accéléré du câble CB et de sa gaine isolante G. L'invention est également applicable à tout câble comportant une gaine isolante.

Suivant un mode de réalisation de l'invention, le procédé comporte une première étape E1 de prélèvement d'un échantillon de la gaine isolante G de câble CB. Cela peut être effectué par un ou plusieurs micro-prélèvements du matériau de la gaine G (quelques milligrammes) qui n'entament pas la fonctionnalité des câbles C et ne sont donc pas destructifs. Cet échantillon est prélevé en petite quantité. Par exemple, la masse prélevée de l'échantillon de la gaine isolante G du câble CB lors de l'étape E1 de prélèvement est de 20 à 40 mg. Cette faible masse représente un prélèvement d'environ (2 x 5 x 5) mm$^3$. A titre d'exemple, la longueur maximale d'isolant qu'on peut prélever d'un câble sur site, en extrémité de câble, sans impacter sa fonctionnalité, est estimée à 1 cm. Il n'y a aucune contrainte concernant la forme de l'échantillon à prélever. L'échantillon a de préférence toujours la même forme, plutôt symétrique (comme une rondelle par exemple), afin de modifier toujours de la même manière le champ magnétique de l'aimant lorsqu'il est inséré dans le spectromètre du dispositif de mesure lors de l'étape E2 de mesure décrite ci-dessous. Cette étape E1 est rapide et plutôt simple à mettre en œuvre. On assure ainsi un suivi non destructif du point de vue de la fonctionnalité du câble CB, qui peut donc être maintenu sur site pour continuer de fonctionner.

Dans une variante, il peut être prévu, en plus ou à la place de la première étape E1 de prélèvement d'un échantillon de la gaine isolante de câble, une première étape E1bis prévoyant la mise en contact d'un dispositif de mesure par résonance magnétique nucléaire de protons avec la gaine G du câble CB, par exemple à l'emplacement où le câble CB est installé sur site, dans le cas où ce dispositif de mesure est portable est amené à cet emplacement. Ici également, l'étape E1bis de mise en contact du dispositif de mesure par résonance magnétique nucléaire de protons avec la gaine G assure un suivi non destructif du point de vue de la fonctionnalité du câble CB, qui peut ainsi être maintenu sur site pour continuer de fonctionner.

Après la première étape E1 et/ou E1bis, on effectue une deuxième étape E2 de mesure par résonance magnétique nucléaire de protons à l'état solide (dont l'abréviation est : $^1$H RMN) sur la gaine isolante G, pour mesurer au moins un premier paramètre P1 caractérisant les chaînes élastiquement actives A du réseau macromoléculaire du polymère élastomère de la gaine G isolante du câble CB. Cette deuxième étape E2 de mesure peut être mise en œuvre par le dispositif de mesure par résonance magnétique nucléaire de protons ayant été amené à l'emplacement du câble dans le cas de l'étape E1 et/ou sur l'échantillon prélevé de la gaine G du câble CB par un dispositif de mesure par résonance magnétique nucléaire de protons présent dans un laboratoire.

Le premier paramètre P1 comprend la masse molaire moyenne M$_c$ des chaînes élastiquement actives A du réseau macromoléculaire du polymère élastomère, qui est calculée à partir de la mesure par résonance magnétique nucléaire de protons.

La topologie du réseau macromoléculaire (chimie) est en corrélation avec les propriétés mécaniques du matériau polymère de la gaine G. En effet, les paramètres matériaux macromoléculaires pertinents reflètent l'état du câble CB. Les paramètres comprennent la distribution de masse molaire M$_c$ entre nœuds de réticulation et éventuellement la fraction FCEA de chaînes élastiquement actives A du réseau macromoléculaire du polymère élastomère, qui est calculée à partir de la mesure par résonance magnétique nucléaire de protons. De préférence, ces deux analyses portent spécifiquement sur les chaînes élastiquement actives A, auxquelles sera appliqué un seuil S. Ils sont directement liés à la tenue mécanique de la gaine isolante G impactant la durée de vie des câbles C. La durée de vie du câble CB et sa fonctionnalité sont liées à l'intégrité de la gaine isolante G. Cette intégrité est décrite par le comportement mécanique du matériau. L'étude du réseau macromoléculaire de l'isolant polymère de la gaine G nécessite uniquement un micro-prélèvement dans le cas où l'étape E1 décrite ci-dessus est mise en œuvre, permettant ainsi un contrôle non destructif du câble ou ne nécessite aucun prélèvement dans le cas où l'étape Elbis décrite ci-dessus est mise en œuvre. Il est à noter que le terme de chaînes élastiquement actives A est un terme spécifique à la famille des élastomères. Pour les autres familles de polymères, on parle simplement des chaînes macromoléculaires.

La résonnance magnétique nucléaire de protons ($^1$H RMN) à l'état solide est une technique d'analyse physicochimique des polymères. Il s'agit d'une technique non destructive permettant la caractérisation du réseau macromoléculaire. Elle peut être utilisée comme outil principal de suivi des modifications du matériau au cours du vieillissement.

Après la deuxième étape E2 de mesure, on effectue une troisième étape E3 d'évaluation de l'état de vieillissement du câble CB à partir du premier paramètre P1 et/ou à partir d'un deuxième paramètre P2, qui est déterminé à partir du premier paramètre caractérisant les chaînes élastiquement actives A. Cette troisième étape E3 d'évaluation comporte une comparaison du premier paramètre P1 et/ou du deuxième paramètre à au moins un seuil prescrit S d'évaluation et une détermination que le câble CB est en fin de vie lorsque le premier paramètre P1 et/ou le deuxième paramètre P2 est inférieur au seuil S prescrit d'évaluation.

Utilisation de la fraction FCEA de chaînes élastiquement actives A :

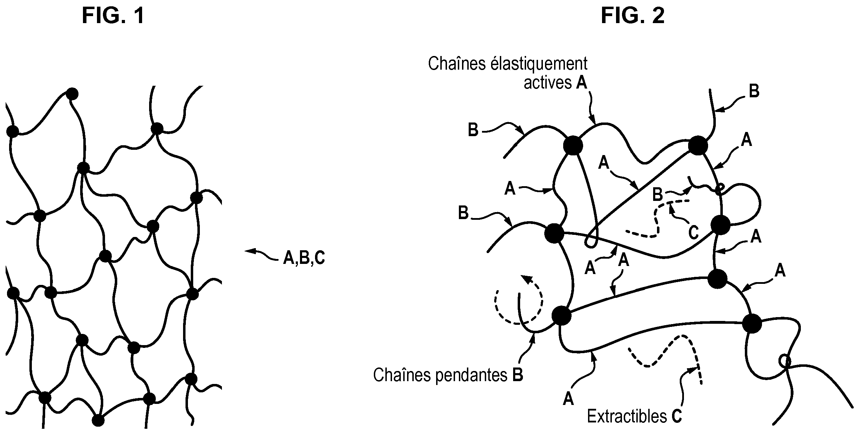

On décrit ci-dessous une première famille de modes de réalisation du procédé, utilisant le premier paramètre P1.
Suivant un mode de réalisation, le premier paramètre P1 comprend la fraction FCEA de chaînes élastiquement actives A du réseau macromoléculaire du polymère élastomère. L'étape E3 d'évaluation comporte la comparaison E31 de la fraction FCEA de chaînes élastiquement actives A du réseau macromoléculaire du polymère élastomère au seuil prescrit S d'évaluation, qui est un seuil $A_{SEUIL}$ de fraction de chaînes élastiquement actives. Ce seuil $A_{SEUIL}$ est identifié en fonction du type du matériau. On détermine que le câble CB est en fin de vie lorsque la fraction FCEA de chaînes élastiquement actives A du réseau macromoléculaire du polymère élastomère est en dessous du seuil prescrit S d'évaluation.
Suivant un mode de réalisation, l'étape E2 de mesure comporte une mesure E21 d'une relaxation transverse de protons par résonance magnétique nucléaire de protons sur la gaine isolante G. On détermine au moins à partir de cette mesure E21 la fraction FCEA de chaînes élastiquement actives A du réseau macromoléculaire du polymère élastomère.
Suivant un mode de réalisation, la mesure E21 de la relaxation transverse de protons permet d'obtenir un signal de relaxation transverse $^{1}$H, lequel peut être obtenu à l'aide de 3 expériences complémentaires : écho solide (aux temps courts) et écho de Hahn/CARR-Purcell-Meiboom-Gill (CPMG) (temps intermédiaires et longs). Cette mesure E21 permet d'obtenir la proportion des composants du réseau par la mesure du signal de relaxation transverse $^{1}$H. Ces expériences apportent d'importantes informations concernant la mobilité des protons du réseau. Ainsi, 3 populations de chaînes macromoléculaires du réseau peuvent être identifiées du fait de dynamiques très différentes au sein du réseau polymère, comme le montrent les figures 1 et 2.
Aux figures 1 et 2, les chaînes élastiquement actives A sont des chaînes réticulées ou enchevêtrées à leurs deux extrémités. Les chaînes pendantes B sont des chaînes réticulées ou enchevêtrées par une seule extrémité uniquement, ou bouts de chaînes. Les extractibles C sont des chaînes non réticulées/libres dans le réseau macromoléculaire. Les chaînes pendantes B ainsi que les extractibles C ne participent pas à l'élasticité : elles sont élastiquement inactives. Les propriétés mécaniques sont alors gouvernées principalement par les chaînes élastiquement actives A. L'analyse du signal de relaxation transverse $^{1}$H permet de déterminer les fractions des différentes portions de chaines A, B et C du réseau.
Suivant un mode de réalisation, on détermine d'abord, via la mesure de relaxation transverse $^{1}$H, la fraction molaire B de chaînes pendantes et la fraction molaire C d'extractible dans le réseau. Les fractions B et C sont obtenues à partir du signal M(t) de relaxation transverse $^{1}$H, ayant été mesuré par la mesure E21, par le biais de l'ajustement analytique suivant :

$$M(t)= B \exp(-t/T2b) + C \exp(-t/T2c)$$

où M(t) est la magnitude de l'aimantation,
T2b est le temps de relaxation transverse $^{1}$H relatifs aux protons des chaînes pendantes B, qui est obtenu à partir de M(t),
T2c est le temps de relaxation transverse $^{1}$H relatifs aux protons des extractibles C, qui est obtenu à partir de M(t).

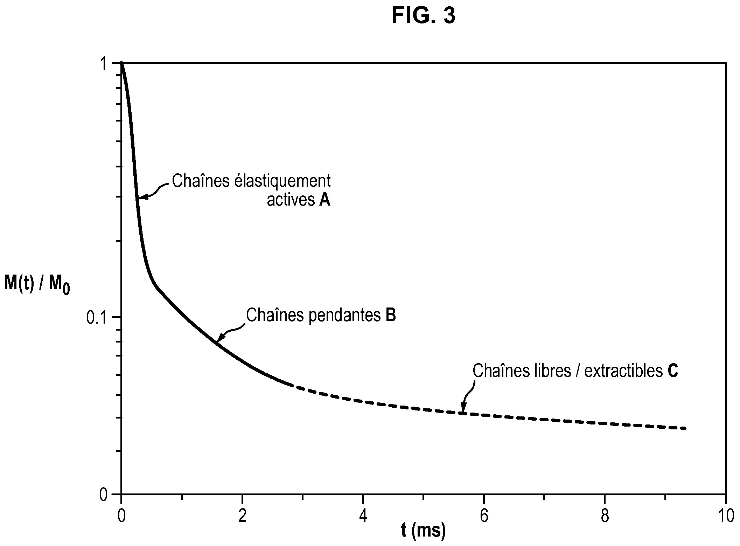

La figure 3 représente schématiquement le signal de relaxation transverse $M(t)/M_0$ en ordonnées (en échelle logarithmique) en fonction du temps t en abscisses, pour un réseau élastomère constitué des 3 composantes de relaxation A, B et C, où $M_0$ est une constante définie. Ainsi que le montre la figure 3, ces extractibles C (représentés en traits interrompus) correspondent aux points de M(t), situés après extinction de la composante relative aux protons des chaînes élastiquement actives A (laquelle est la première composante de relaxation).
La simple soustraction FCEA = 1 - B - C donne la fraction FCEA de chaînes élastiquement actives A dans le réseau.
La détermination de la fraction FCEA de chaînes élastiquement actives A par RMN permet de savoir la position par rapport au seuil $A_{SEUIL}$ :

- si FCEA > $A_{SEUIL}$, la tenue mécanique du matériau est considérée satisfaisante,

- si FCEA < $A_{SEUIL}$, la matériau est considéré dégradé et ne plus être apte à assurer une bonne tenue.

De plus, si on a l'évolution de la cinétique de la fraction FCEA de chaînes élastiquement actives A (avec des essais de vieillissement accéléré par exemple), on peut alors déterminer la durée de vie résiduelle du matériau.

Ainsi une mesure de la fraction FCEA de chaînes élastiquement actives A en dessous du seuil $A_{SEUIL}$ indique que le câble CB est en fin de vie en service, et par conséquent le câble CB est dans un état de vieillissement trop avancé et doit être remplacé par un câble CB neuf sur site.

Ainsi, le procédé suivant l'invention permet d'obtenir une information fiable sur l'usure du câble CB, en fonction de laquelle une opération de maintenance sur le câble peut être décidée.

Utilisation de la masse molaire moyenne $M_c$ des chaînes élastiquement actives A :

On décrit ci-dessous une deuxième famille de modes de réalisation du procédé, utilisant le deuxième paramètre P2.

Suivant un mode de réalisation, le deuxième paramètre P2 comporte un allongement $\varepsilon_r$ à la rupture, ayant été déterminé à partir de la masse molaire moyenne $M_c$ des chaînes élastiquement actives A du premier paramètre P1.

Suivant un mode de réalisation, l'étape E3 d'évaluation comporte la comparaison E32 de l'allongement $\varepsilon_r$ à la rupture au seuil prescrit S d'évaluation, qui est un seuil S2 d'allongement à la rupture. On détermine que le câble CB est en fin de vie lorsque l'allongement $\varepsilon_r$ à la rupture est en dessous du seuil prescrit S2 prescrit d'évaluation.

L'étape E2 de mesure comporte une mesure E22 de montée de cohérences à deux quantas de protons par résonance magnétique nucléaire de protons à l'état solide sur la gaine isolante G. On détermine au moins à partir de cette mesure E22 la masse molaire moyenne $M_c$ des chaînes élastiquement actives A du réseau macromoléculaire du polymère élastomère.

Suivant un mode de réalisation, la mesure E22 de montée des cohérences à deux quanta $^1$H est obtenue en se basant sur la séquence de Baum & Pines, améliorée par Saalwächter.

L'analyse permet d'obtenir la courbe expérimentale $I_{DQ}$ présentant l'évolution de l'amplitude des cohérences à deux quanta $^1$H en fonction du temps d'excitation $t_{DQ}$.

La description analytique des courbes $I_{DQ}$ de montée de cohérences $^1$H donne la valeur de la distribution du couplage résiduel $D_{res}$ du réseau, selon l'équation suivante :

$$I_{DQ}(t_{DQ}) = \int_0^{D_{Stat}} P(D_{res}) f(t_{DQ}, D_{res}) dD_{res}$$

où $D_{stat}$ est une constante définie de distribution,
$P(D_{res})$ est une densité définie de distribution.

$D_{res}$ en (Hz) correspond au couplage dipolaire résiduel, mesuré par le biais de l'expérience RMN. C'est le couplage dipolaire moyen d'un segment de chaînes entre contraintes topologiques dans le réseau. Plus les contraintes topologiques sont éloignées, plus $D_{res}$ est faible car moyenné par plus de mouvements moléculaires.

$D_{stat}$ (en Hz) correspond au couplage dipolaire statique, c'est celui mesuré pour les protons en l'absence de mouvements moléculaires (pour l'obtenir, il faudrait réaliser une mesure à très basse température pour un polymère). $D_{stat}$ est la valeur du couplage dipolaire $^1$H-$^1$H statique. $D_{stat}$ peut être calculée à partir des distances $^1$H-$^1$H au niveau d'une unité de répétition en faisant abstraction de tout mouvement moléculaire.

k est sans unité, c'est un paramètre qui permet de tenir compte d'un effet de moyenne supplémentaire provenant des mouvements à l'intérieur d'un segment de Kuhn (mouvements de l'ordre de quelques centaines de picosecondes, librations et sauts conformationnels). k est propre à chaque polymère.

P(Dres) est la fonction de distribution du couplage dipolaire résiduel pour le matériau étudié. Pour certains matériaux, P(Dres) peut être une densité de probabilité gausienne. Pour l'EPDM, afin de décrire les hétérogénéités au niveau de P(Dres), P(Dres) est calculée à partir d'une densité de probabilité asymétrique dite « log-normale », qui est la suivante :

$$f(x; \sigma, \mu) = \frac{1}{x\sigma\sqrt{2\pi}} e^{\frac{-[\ln(x)-\mu]^2}{2\sigma^2}}$$

où $\mu$ et $\sigma$ sont deux paramètres ajustables.

À partir des paramètres de la distribution P(Dres) déterminés pour l'EPDM réticulé, non-chargé ($\mu$ = 0.752 ; $\sigma$ = 0.506), il est possible de tracer la distribution des couplages dipolaires résiduels au sein du réseau, avant vieillissement.

$f(t_{DQ}, D_{res})$ est une fonction coeur qui traduit la montée de la courbe $I_{DQ}(t_{DQ})$, obtenue par la mesure double quanta DQ $^1$H, si un seul couplage dipolaire résiduel était présent dans le réseau. En d'autres termes, cette équation permet de décrire la montée des cohérences pour un réseau monomodal parfait, sans l'aide d'aucune distribution.

Pour le polymère élastomère du matériau, la fonction $f(t_{DQ}, D_{res})$ peut être du type :

$$f\left(t_{DQ}, D_{res}\right) = 0.5\left[1 - e^{-(Qt_{DQ})^{1.5}} \cos\left(UD_{res}t_{DQ}\right)\right]$$

où Q et U sont des premières et deuxièmes coefficients prédéterminés.

Par exemple, pour le matériau d'EPDM précité, Q=0.378 et U =0.583 et la fonction $f(t_{DQ}, D_{res})$ est :

$$f\left(t_{DQ}, D_{res}\right) = 0.5\left[1 - e^{-(0.378 D_{Res}t_{DQ})^{1.5}} \cos\left(0.583 D_{res}t_{DQ}\right)\right]$$

Bien entendu, la fonction $f(t_{DQ}, D_{res})$ peut être différente pour un autre polymère élastomère ou pour un autre polymère.

La distribution de $D_{res}$ est transformée en une distribution de la masse molaire moyenne $M_c$ entre chaînes macromoléculaires (contraintes topologiques qui englobent les enchevêtrements et les nœuds de réticulation), selon l'équation suivante :

$$k\frac{D_{res}}{D_{stat}} = \frac{3}{5}\frac{r^2}{N}$$

où N est le nombre de segments de Khun entre nœuds de réticulation, qui est proportionnel à la masse molaire moyenne $M_c$ du polymère,

r et k sont des paramètres associés au matériau et pouvant être déterminés par dynamique moléculaire.

$r^2$ correspond au carré du rapport entre le vecteur bout à bout (ou la longueur de chaîne bout à bout) pour une portion de chaînes entre contraintes topologiques ($R^2$) et la valeur moyenne de ce vecteur (ou de la longueur de chaîne bout à bout) à l'équilibre ($R^2$moyen). $r^2$ fait souvent l'objet d'une distribution de type Gaussienne. $D_{res}$ dépend de l'inverse de la masse molaire moyenne $M_c$ et de l'inverse de la masse molaire moyenne $M_e$ des chaînes enchevêtrées.

$$D_{res} \propto 1/M_c + 1/M_e$$

Cette distribution de Dres est assimilable à la distribution de la masse molaire entre contraintes topologiques (M).

On fait l'hypothèse que $1/M_e$ est très inférieur à $1/M_c$ (on néglige les enchevêtrements).

$M_c$ est calculée via l'équation ci-dessus, qui lie $D_{res}$ à la masse molaire $M_c$ via le facteur G =($D_{stat}$ / k).3/5. $r^2$ . On peut ainsi calculer :

$$D_{res} = (D_{stat} / k).3/5. r^2/ M_c$$

On a ainsi :

$$M_c = (D_{stat} / k).3/5. r^2/D_{res}$$

On a ainsi $M_c$ = G/Dres

Le paramètre prépondérant qui gouverne les propriétés mécaniques et leur dégradation étant les chaînes élastiquement actives, l'évolution de leur masse molaire ($M_c$) est un bon indicateur et en corrélation directe avec l'évolution de l'allongement à la rupture $\varepsilon_r$.

Connaissant la masse molaire moyenne $M_c$ des chaînes élastiquement actives A, une relation multi-échelle reliant $M_c$ à l'allongement $\varepsilon_r$ à la rupture permet de prédire la valeur de l'allongement $\varepsilon_r$ à la rupture du matériau analysé et donc de conclure sur son état de dégradation par rapport à la valeur seuil critique S2.

Ainsi une mesure d'une masse molaire moyenne ($M_c$ : masse molaire moyenne des chaînes entre nœuds de réticulation et $M_e$ : masse molaire moyenne des chaînes enchevêtrées) du matériau donnera une indication sur la valeur de l'allongement $\varepsilon_r$ à la rupture. Par exemple, une valeur de l'allongement $\varepsilon_r$ à la rupture inférieur à 50% du seuil S2 d'allongement à la rupture en valeur absolue indique que le câble a franchi la limite de sa vie en service.

Si on a l'évolution de la cinétique de $M_c$ du matériau (avec des essais de vieillissement accéléré par exemple), on peut déterminer alors l'évolution de la cinétique de l'allongement $\varepsilon_r$ à la rupture grâce à la relation multi-échelle. Cette approche permet de déterminer la durée de vie résiduelle du matériau.

On décrit ci-dessous un exemple de relation entre la masse molaire moyenne Mc des chaînes élastiquement actives A et l'allongement $\varepsilon_r$ à la rupture.

Un exemple de relation entre l'échelle macromoléculaire ($M_c$) et l'échelle macroscopique ($\varepsilon_r$) utilise une méthodologie basée sur la mécanique de la rupture et sur le concept du défaut intrinsèque pour prédire la rupture de l'élastomère (pour un matériau dont la post-réticulation est le processus prépondérant au cours du vieillissement).

Les données d'entrée sont :

- La valeur de l'énergie de déchirement $J_{c0}$ du matériau non vieilli, obtenue sur éprouvette fissurée : éprouvette SENT (simple entaille),
- L'élongation à la rupture d'une éprouvette en traction ainsi que la courbe contrainte en fonction de la déformation sur matériau non vieilli. ($\square_{c0}$, $W_0$=f($\square$)), l'indice 0 se référant au matériau non vieilli.

A partir de ces données d'entrée, on peut calculer la taille du défaut intrinsèque $a^{th}$ :

$$a^{th} = \frac{J_{c_0}}{4.k(\lambda_{c_0}).W_{c_0}} \qquad \text{(équation 1)}$$

avec

$$k(\lambda) = \frac{\pi}{\sqrt{\lambda}}$$

où $a^{th}$ est la taille théorique du défaut intrinsèque,
$J_{c0}$ est l'énergie de déchirement du matériau non vieilli,
$k(\lambda)$ est un facteur de proportionnalité dans le cas d'une éprouvette DENT.

Dans le cas de l'EPDM, nous avons trouvé une longueur de défaut intrinsèque ($2a^{th}$) égale à 0,5 mm (diamètre d'un défaut circulaire fictif dans une éprouvette de traction uni-axiale) et qui sera admise pour tout autre EPDM.

$M_c$ =f ($t \times a_T$) : L'évolution de la masse molaire $M_c$ en fonction du temps réduit $t \times a_T$ est :

$$M_c = M_{c1} + a_1 e^{a_2 t a_T} \qquad \text{(équation 2)}$$

obtenue par équivalence temps-température.
$t \times a_T$ désigne t multiplié par $a_T$.
$a_T$ est un facteur de glissement de la courbe équivalence temps température.
$a_1$, $a_2$, sont des constantes obtenues par régressions aux moindres carrés,
$M_{c1}$ paramètre obtenu par régression aux moindres carrés,
t est le temps en heure.

Les données de sorties sont $J_c$ et $W_c$.
$J_c$ est l'énergie de déchirement critique de rupture.
$W_c$ est la densité d'énergie de déformation à rupture.
$J_c$ =f ($M_c$) : La valeur de $J_c$ pour une valeur de la masse molaire $M_c$ donnée est :

$$J_c = \frac{A}{M_{c0}} \left( \sqrt{M_c} - \sqrt{M_{c0}} \right)$$

$$\text{(équation 3)}$$

Avec pour l'EPDM : $A = 125 \, kJ/m^2$ et $M_{c0} = 678$ g/mol (représente la valeur seuil en deçà de laquelle le matériau présente une énergie de déchirement nulle).

$W_c = f(M_c)$ : la valeur de la densité $W_c$ d'énergie de déformation correspondante.

En première approximation, on fait l'hypothèse d'un modèle Gaussien qui permet d'écrire que :

$$W = \frac{\rho RT}{2M_c} \left(1 - \frac{2}{f}\right)(\lambda_1^2 + \lambda_2^2 + \lambda_3^2 - 3)$$

$$\text{(équation 4)}$$

où R et T sont la constante des gaz et la température absolue respectivement, $\rho$ la masse volumique, f un facteur de fonctionnalité dépendant du nombre de segments partant d'un nœud de réticulation,

W est la densité d'énergie de déformation,

$\lambda_1, \lambda_2, \lambda_3$ sont les valeurs propres du tenseur de gradient de déformation.

Pour une valeur de $M_c$ donnée, on peut déduire celle de $J_c$ correspondante (équation 3), ainsi que la densité d'énergie de déformation correspondante $W_c$ calculée par une méthode numérique à partir de l'équation 4 avec $\lambda_2 = \lambda_3 = \lambda_1^{-1/2}$ dans le cas de traction uniaxiale.

Connaissant la taille du défaut intrinsèque $a^{th}$, on peut obtenir l'élongation $\lambda_c$ à la rupture en résolvant l'équation suivante :

$$J_c = 4k_c a^{th} W_c \qquad \text{(Equation 5)}$$

Avec :

$$k_c = \frac{\pi}{\sqrt{\lambda_c}} \qquad \text{(Equation 6)}$$

L'allongement $\varepsilon_r$ à la rupture est exprimé par :

$$\varepsilon_r = \lambda_c - 1 \qquad \text{(Equation 7)}$$

La masse molaire entre contraintes topologiques M obtenue ici implique à la fois la contribution des enchevêtrements ($M_e$) et des nœuds de réticulation ($M_c$). C'est à dire que la M (obtenue par RMN via l'équation précédente) peut se décomposer :

$$M = M_c + M_e$$

où $M_c$ est la masse molaire entre noeuds de réticulation et $M_e$ est la masse molaire entre enchevêtrements et Me est généralement donnée dans les manuels.

$$Mc = M - Me$$

Le critère de fin de vie est fixé à un seuil d'allongement de rupture de 50% en absolue.

L'approche décrite peut être valorisée par deux applications distinctes :

- Utilisation de l'outil pour l'évaluation de l'état du matériau à l'instant t connaissant sa $M_c$ (mesurée par RMN),
- Utilisation comme outil prédictif : connaissant l'évolution de la masse molaire $M_c$ du matériau, on peut obtenir l'évolution de l'allongement $\varepsilon_r$ à la rupture et prédire ainsi la fin de vie du câble.

Dans ces première et deuxième familles de modes de réalisation, la troisième étape E3 d'évaluation peut mettre en œuvre la comparaison E31 et/ou la comparaison E32.

Le procédé décrit ci-dessus peut être mis en œuvre sur un calculateur (pouvant être un ordinateur, processeur(s), microprocesseur(s) ou autres) pour l'étape E3 d'évaluation. Ce calculateur peut avoir été programmé par un programme d'ordinateur, comportant des instructions de code pour la mise en œuvre du procédé, lorsqu'il est mis en oeuvre sur ce calculateur.

Bien entendu, les modes de réalisation, caractéristiques, possibilités et exemples ci-dessus peuvent être combinés l'un avec l'autre ou être sélectionnés indépendamment l'un de l'autre, mais l'invention n'est définie que par les revendications annexées.

## Revendications

1. Procédé de contrôle d'une gaine isolante (G) en un matériau d'au moins un polymère élastomère d'un câble (CB),

   comportant une étape (E2) de mesure par résonance magnétique nucléaire de protons sur la gaine isolante (G) pour mesurer au moins un premier paramètre (P1) caractérisant les chaînes élastiquement actives (A) du réseau macromoléculaire du polymère élastomère,
   l'étape (E2) de mesure comportant une mesure (E22) de montée de cohérences à deux quantas de protons par résonance magnétique nucléaire de protons sur la gaine isolante (G) pour déterminer au moins à partir de cette mesure (E22) la masse molaire moyenne ($M_c$) des chaînes élastiquement actives (A) du réseau macromoléculaire du polymère élastomère,
   le premier paramètre (P1) comprenant la masse molaire moyenne ($M_c$) des chaînes élastiquement actives (A) du réseau macromoléculaire du polymère élastomère,
   la masse molaire moyenne $M_c$ des chaînes élastiquement actives (A) étant calculée à partir de l'équation

   $$M_c = (D_{stat} / k).3/5.\ r^2/D_{res}$$

   où
   $D_{stat}$ est un couplage dipolaire statique prédéterminé,
   $D_{res}$ est le couplage dipolaire résiduel ayant été mesuré par la mesure (E22) de montée de cohérences à deux quantas de protons par résonance magnétique nucléaire de protons,
   k est un paramètre prédéterminé de topologie de couplage local et de mouvements entre segments du matériau,
   r est le ratio prédéterminé de la longueur de chaîne bout à bout pour une portion de chaînes entre contraintes topologiques et la valeur moyenne de cette longueur de chaîne bout à bout à l'équilibre pour le matériau,
   et une étape (E3) d'évaluation comportant une comparaison du premier paramètre (P1) caractérisant les chaînes élastiquement actives (A) et/ou d'un deuxième paramètre (P2), ayant été déterminé à partir du premier paramètre (P1) caractérisant les chaînes élastiquement actives (A), à au moins un seuil prescrit (S) d'évaluation pour déterminer que le câble (CB) est en fin de vie lorsque le premier paramètre (P1) et/ou le deuxième paramètre (P2) est inférieur au seuil prescrit d'évaluation, le deuxième paramètre (P2) comportant un allongement ($\varepsilon r$) à la rupture et ayant été déterminé à partir de la masse molaire moyenne (Mc) des chaînes élastiquement actives (A).

2. Procédé suivant la revendication 1, **caractérisé en ce que** le premier paramètre (P1) comprend en outre la fraction (FCEA) de chaînes élastiquement actives (A) du réseau macromoléculaire du polymère élastomère,
   l'étape (E3) d'évaluation comportant la comparaison (E31) de la fraction (FCEA) de chaînes élastiquement actives (A) du réseau macromoléculaire du polymère élastomère au seuil prescrit (S) d'évaluation, pour déterminer que le câble (CB) est en fin de vie lorsque la fraction (FCEA) de chaînes élastiquement actives (A) du réseau macromoléculaire du polymère élastomère est en dessous du seuil prescrit (S) d'évaluation.

3. Procédé suivant la revendication 2, **caractérisé en ce que** l'étape (E2) de mesure comporte une mesure (E21) d'une relaxation transverse de protons par résonance magnétique nucléaire de protons sur la gaine isolante (G) pour déterminer au moins à partir de cette mesure (E21) la fraction (FCEA) de chaînes élastiquement actives (A) du réseau macromoléculaire du polymère élastomère.

4. Procédé suivant l'une quelconque des revendications précédentes, **caractérisé en ce que**
   l'étape (E3) d'évaluation comporte la comparaison (E32) de l'allongement ($\varepsilon_r$) à la rupture au seuil prescrit (S) d'évaluation pour déterminer que le câble (CB) est en fin de vie lorsque l'allongement ($\varepsilon_r$) à la rupture est en dessous du seuil prescrit (S) d'évaluation.

5. Procédé suivant l'une quelconque des revendications précédentes, comportant une étape (E1) de prélèvement d'un échantillon de la gaine isolante de câble, l'étape (E2) de mesure par résonance magnétique nucléaire de protons étant effectuée sur l'échantillon.

6. Procédé suivant la revendication 5, dans lequel la masse prélevée de l'échantillon de la gaine isolante (G) du câble (CB) lors de l'étape (E1) de prélèvement est de 20 à 40 mg.

7. Procédé suivant l'une quelconque des revendications précédentes, comportant une étape (E1bis) de mise en contact d'un dispositif de mesure par résonance magnétique nucléaire de protons avec la gaine isolante (G) du câble (CB), l'étape (E2) de mesure étant effectuée par le dispositif de mesure par résonance magnétique nucléaire de protons.

8. Programme d'ordinateur, comportant des instructions de code pour la mise en œuvre de l'étape (E3) d'évaluation du procédé suivant l'une quelconque des revendications précédentes, lorsqu'il est mis en œuvre sur un calculateur.

9. Dispositif de contrôle d'une gaine isolante (G) en un matériau d'au moins un polymère élastomère d'un câble (CB),

le dispositif de contrôle comportant
un dispositif (E1, E1bis) de mesure par résonance magnétique nucléaire de protons sur la gaine isolante (G) pour mesurer au moins un premier paramètre (P1) caractérisant les chaînes élastiquement actives (A) du réseau macromoléculaire du polymère élastomère, le premier paramètre (P1) comprenant la masse molaire moyenne ($M_c$) des chaînes élastiquement actives (A) du réseau macromoléculaire du polymère élastomère,
le dispositif (E1, E1bis) de mesure étant apte à effectuer une mesure (E22) de montée de cohérences à deux quantas de protons par résonance magnétique nucléaire de protons sur la gaine isolante (G) pour déterminer au moins à partir de cette mesure (E22) la masse molaire moyenne ($M_c$) des chaînes élastiquement actives (A) du réseau macromoléculaire du polymère élastomère,
la masse molaire moyenne $M_c$ des chaînes élastiquement actives (A) étant calculée à partir de l'équation

$$M_c = (D_{stat} / k).3/5. \ r^2/D_{res}$$

où
$D_{stat}$ est un couplage dipolaire statique prédéterminé,
$D_{res}$ est le couplage dipolaire résiduel ayant été mesuré par la mesure (E22) de montée de cohérences à deux quantas de protons par résonance magnétique nucléaire de protons,
k est un paramètre prédéterminé de topologie de couplage local et de mouvements entre segments du matériau,
r est le ratio prédéterminé de la longueur de chaîne bout à bout pour une portion de chaînes entre contraintes topologiques et la valeur moyenne de cette longueur de chaîne bout à bout à l'équilibre pour le matériau, et un calculateur permettant de mettre en œuvre une étape (E3) d'évaluation comportant une comparaison du premier paramètre (P1) caractérisant les chaînes élastiquement actives (A) et/ou d'un deuxième paramètre (P2), ayant été déterminé à partir du premier paramètre (P1) caractérisant les chaînes élastiquement actives (A), à au moins un seuil prescrit (S) d'évaluation pour déterminer que le câble (CB) est en fin de vie lorsque le premier paramètre (P1) et/ou le deuxième paramètre (P2) est inférieur au seuil prescrit d'évaluation, le deuxième paramètre (P2) comportant un allongement ($\varepsilon$r) à la rupture et ayant été déterminé à partir de la masse molaire moyenne (Mc) des chaînes élastiquement actives (A).

10. Dispositif suivant la revendication 9, dans lequel le premier paramètre (P1) comprend en outre la fraction (FCEA) de chaînes élastiquement actives (A) du réseau macromoléculaire du polymère élastomère,
le calculateur permettant de mettre en œuvre l'étape (E3) d'évaluation comportant la comparaison (E31) de la fraction (FCEA) de chaînes élastiquement actives (A) du réseau macromoléculaire du polymère élastomère au seuil prescrit (S) d'évaluation, pour déterminer que le câble (CB) est en fin de vie lorsque la fraction (FCEA) de chaînes élastiquement actives (A) du réseau macromoléculaire du polymère élastomère est en dessous du seuil prescrit (S) d'évaluation.

11. Dispositif suivant la revendication 9 ou 10, dans lequel le dispositif (E1, E1bis) de mesure est apte à effectuer une mesure (E21) d'une relaxation transverse de protons par résonance magnétique nucléaire de protons sur la gaine isolante (G) pour déterminer au moins à partir de cette mesure (E21) la fraction (FCEA) de chaînes élastiquement actives (A) du réseau macromoléculaire du polymère élastomère.

12. Dispositif suivant l'une quelconque des revendications précédentes, dans lequel
le calculateur permet de mettre en œuvre l'étape (E3) d'évaluation comportant la comparaison (E32) de l'allongement ($\varepsilon_r$) à la rupture au seuil prescrit (S) d'évaluation pour déterminer que le câble (CB) est en fin de vie lorsque l'allongement ($\varepsilon_r$) à la rupture est en dessous du seuil prescrit (S) d'évaluation.

**Patentansprüche**

1.  Verfahren zur Prüfung einer Isolierhülle (G) aus einem Material aus mindestens einem elastomeren Polymer eines Kabels (CB),

    umfassend einen Schritt (E2) des Messens durch Protonen-Kernspinresonanz auf der Isolierhülle (G) zum Messen mindestens eines ersten Parameters (P1), der die elastisch aktiven Ketten (A) des makromolekularen Netzwerks des elastomeren Polymers kennzeichnet,
    wobei Schritt (E2) des Messens eine Messung (E22) eines Aufbaus von Zwei-Quanten-Kohärenzen von Protonen durch Protonen-Kernspinresonanz auf der Isolierhülle (G) umfasst, um mindestens ausgehend von dieser Messung (E22) die mittlere molare Masse ($M_c$) der elastisch aktiven Ketten (A) des makromolekularen Netzwerks des elastomeren Polymers zu bestimmen,
    wobei der erste Parameter (P1) die mittlere molare Masse ($M_c$) der elastisch aktiven Ketten (A) des makromolekularen Netzwerks des elastomeren Polymers umfasst,
    die mittlere molare Masse $M_c$ der elastisch aktiven Ketten (A) ausgehend von der folgenden Gleichung berechnet wird

    $$M_c = (D_{stat} / k).3/5. r^2/D_{res}$$

    wo
    $D_{stat}$ eine vorbestimmte statische Dipol-Kopplung ist,
    $D_{res}$ die Rest-Dipol-Kopplung ist, die durch die Messung (E22) des Aufbaus von Zwei-Quanten-Kohärenzen von Protonen durch Protonen-Kernspinresonanz gemessen wurde,
    k ein vorbestimmter Parameter für die Topologie lokaler Kopplung und Bewegungen zwischen Segmenten des Materials ist,
    r das vorbestimmte Verhältnis der Gesamtkettenlänge für einen Abschnitt von Ketten zwischen topologischen Einschränkungen und des Mittelwerts dieser Gesamtkettenlänge im Gleichgewichtszustand für das Material ist,
    und einen Schritt (E3) des Bewertens, der einen Vergleich des ersten Parameters (P1), der die elastisch aktiven Ketten (A) kennzeichnet, und/oder eines zweiten Parameters (P2), der ausgehend von dem ersten Parameter (P1) bestimmt wurde, der die elastisch aktiven Ketten (A) kennzeichnet, mit mindestens einem vorgeschriebenen Bewertungsschwellenwert (S) umfasst, um zu bestimmen, dass das Kabel (CB) sich am Ende der Lebensdauer befindet, wenn der erste Parameter (P1) und/oder der zweite Parameter (P2) kleiner als der vorgeschriebene Bewertungsschwellenwert ist, wobei der zweite Parameter (P2) eine Bruchdehnung ($\varepsilon_r$) umfasst und ausgehend von der mittleren molaren Masse (Mc) der elastisch aktiven Ketten (A) bestimmt wurde.

2.  Verfahren nach Anspruch 1, **dadurch gekennzeichnet, dass** der erste Parameter (P1) ferner den Anteil (FCEA) elastisch aktiver Ketten (A) des makromolekularen Netzwerks des elastomeren Polymers umfasst,
    der Schritt (E3) des Bewertens den Vergleich (E31) des Anteils (FCEA) elastisch aktiver Ketten (A) des makromolekularen Netzwerks des elastomeren Polymers mit dem vorbeschriebenen Bewertungsschwellenwert (S) umfasst, um zu bestimmen, dass das Kabel (CB) sich am Ende der Lebensdauer befindet, wenn der Anteil (FCEA) elastisch aktiver Ketten (A) des makromolekularen Netzwerks des elastomeren Polymers unter dem vorgeschriebenen Bewertungsschwellenwert (S) liegt.

3.  Verfahren nach Anspruch 2, **dadurch gekennzeichnet, dass** der Schritt (E2) des Messens eine Messung (E21) einer transversalen Protonenrelaxation durch Protonen-Kernspinresonanz auf der Isolierhülle (G) umfasst, um mindestens ausgehend von dieser Messung (E21) den Anteil (FCEA) elastisch aktiver Ketten (A) des makromolekularen Netzwerks des polymeren Elastomers zu bestimmen.

4.  Verfahren nach einem beliebigen der vorhergehenden Ansprüche, **dadurch gekennzeichnet, dass** der Schritt (E3) des Bewertens den Vergleich (E32) der Bruchdehung ($\varepsilon_r$) mit dem vorgeschriebenen Bewertungsschwellenwert (S) umfasst, um zu bestimmen, dass das Kabel (CB) sich am Ende der Lebensdauer befindet, wenn die Bruchdehung ($\varepsilon_r$) unter dem vorgeschriebenen Bewertungsschwellenwert (S) liegt.

5. Verfahren nach einem beliebigen der vorhergehenden Ansprüche, umfassend einen Schritt (E1) des Entnehmens einer Probe von der Kabelisolierhülle, wobei der Schritt (E2) des Messens durch Protonen-Kernspinresonanz auf der Probe durchgeführt wird.

6. Verfahren nach Anspruch 5, wobei die im Schritt (E1) des Entnehmens entnommene Masse der Probe der Isolierhülle (G) des Kabels (CB) zwischen 20 und 40 mg beträgt.

7. Verfahren nach einem beliebigen der vorhergehenden Ansprüche, umfassend einen Schritt (E1bis) des Inkontaktbringens einer Vorrichtung zur Messung durch Protonen-Kernspinresonanz mit der Isolierhülle (G) des Kabels (CB), wobei der Schritt (E2) des Messens durch die Protonen-Kernspinresonanz-Messvorrichtung durchgeführt wird.

8. Computerprogramm, das Codeanweisungen für die Durchführung des Bewertungsschritts (E3) des Verfahrens nach einem beliebigen der vorhergehenden Ansprüche umfasst, wenn es auf einem Rechner durchgeführt wird.

9. Vorrichtung zur Prüfung einer Isolierhülle (G) aus einem Material aus mindestens einem elastomeren Polymer eines Kabels (CB),
wobei die Prüfvorrichtung umfasst:

eine Vorrichtung (E1, E1bis) zur Messung durch Protonen-Kernspinresonanz auf der Isolierhülle (G) zum Messen mindestens eines ersten Parameters (P1), der die elastisch aktiven Ketten (A) des makromolekularen Netzwerks des elastomeren Polymers kennzeichnet, wobei der erste Parameter (P1) die mittlere molare Masse ($M_c$) der elastisch aktiven Ketten (A) des makromolekularen Netzwerks des elastomeren Polymers umfasst,
wobei die Messvorrichtung (E1, E1bis) dazu geeignet ist, eine Messung (E22) eines Aufbaus von Zwei-Quanten-Kohärenzen von Protonen durch Protonen-Kernspinresonanz auf der Isolierhülle (G) durchzuführen, um mindestens ausgehend von dieser Messung (E22) die mittlere molare Masse ($M_c$) der elastisch aktiven Ketten (A) des makromolekularen Netzwerks des elastomeren Polymers zu bestimmen,
wobei die mittlere molare Masse $M_c$ der elastisch aktiven Ketten (A) ausgehend von der folgenden Gleichung berechnet wird

$$M_c = (D_{stat} / k).3/5. r^2/D_{res}$$

wo
$D_{stat}$ eine vorbestimmte statische Dipol-Kopplung ist,
$D_{res}$ die Rest-Dipol-Kopplung ist, die durch die Messung (E22) des Aufbaus von Zwei-Quanten-Kohärenzen von Protonen durch Protonen-Kernspinresonanz gemessen wurde,
k ein vorbestimmter Parameter für die Topologie lokaler Kopplung und Bewegungen zwischen Segmenten des Materials ist,
r das vorbestimmte Verhältnis der Gesamtkettenlänge für einen Abschnitt von Ketten zwischen topologischen Einschränkungen und des Mittelwerts dieser Gesamtkettenlänge im Gleichgewichtszustand für das Material ist, und einen Rechner, der das Durchführen eines Schritts (E3) des Bewertens erlaubt, der einen Vergleich des ersten Parameters (P1), der die elastisch aktiven Ketten (A) kennzeichnet, und/oder eines zweiten Parameters (P2) ermöglicht, der ausgehend von dem ersten Parameter (P1) bestimmt wurde, der die elastisch aktiven Ketten (A) kennzeichnet, mit mindestens einem vorgeschriebenen Bewertungsschwellenwert (S) umfasst, um zu bestimmen, dass das Kabel (CB) sich am Ende der Lebensdauer befindet, wenn der erste Parameter (P1) und/oder der zweite Parameter (P2) kleiner als der vorgeschriebene Bewertungsschwellenwert ist, wobei der zweite Parameter (P2) eine Bruchdehung ($\varepsilon_r$) umfasst und ausgehend von der mittleren molaren Masse (Mc) der elastisch aktiven Ketten (A) bestimmt wurde.

10. Vorrichtung nach Anspruch 9, wobei der erste Parameter (P1) ferner den Anteil (FCEA) elastisch aktiver Ketten (A) des makromolekularen Netzwerks des elastomeren Polymers umfasst,
wobei der Rechner das Durchführen des Schritts (E3) des Bewertens ermöglicht, der den Vergleich (E31) des Anteils (FCEA) elastisch aktiver Ketten (A) des makromolekularen Netzwerks des elastomeren Polymers mit dem vorgeschriebenen Bewertungsschwellenwert (S) umfasst, um zu bestimmen, dass das Kabel (CB) sich am Ende der Lebensdauer befindet, wenn der Anteil (FCEA) elastisch aktiver Ketten (A) des makromolekularen Netzwerks des elastomeren Polymers unterhalb des vorgeschriebenen Bewertungsschwellenwerts (S) liegt.

11. Vorrichtung nach Anspruch 9 oder 10, wobei die Messvorrichtung (E1, Elbis) dazu geeignet ist, eine Messung (E21) einer transversalen Protonenrelaxation durch Protonen-Kernspinresonanz auf der Isolierhülle (G) durchzuführen, um mindestens ausgehend von dieser Messung (E21) den Anteil (FCEA) elastisch aktiver Ketten (A) des makromolekularen Netzwerks des polymeren Elastomers zu bestimmen.

12. Vorrichtung nach einem beliebigen der vorhergehenden Ansprüche, wobei der Rechner das Durchführen des Bewertungsschritts (E3) ermöglicht, der den Vergleich (E32) der Bruchdehnung ($\varepsilon_r$) mit dem vorgeschriebenen Bewertungsschwellenwert (S) umfasst, um zu bestimmen, dass das Kabel (CB) sich am Ende der Lebensdauer befindet, wenn die Bruchdehung ($\varepsilon_r$) unter dem vorgeschriebenen Bewertungsschwellenwert (S) liegt.

**Claims**

1. A method for non-destructive testing of an insulating sheath (G) made of a material of at least one elastomeric polymer of a cable (CB),

including a step (E2) of measurement using proton nuclear magnetic resonance on the insulating sheath (G) in order to measure at least a first parameter (P1) characterizing the elastically active chains (A) of the macromolecular network of the elastomeric polymer,
the measurement step (E2) including a measurement (E22) of the increase in proton two-quantum coherences using proton nuclear magnetic resonance on the insulating sheath (G) in order to determine at least from this measurement (E22) the average molar mass ($M_c$) of the elastically active chains (A) of the macromolecular network of the elastomeric polymer,
the first parameter (P1) comprising the average molar mass ($M_c$) of the elastically active chains (A) of the macromolecular network of the elastomeric polymer,
wherein the average molar mass $M_c$ of the elastically active chains (A) is calculated from the equation

$$M_c = (D_{stat}/k).3/5.\ r^2/D_{res}$$

where
$D_{stat}$ is a predetermined static dipolar coupling,
$D_{res}$ is the residual dipolar coupling having been measured by the measurement (E22) of the increase in proton two-quantum coherences using proton nuclear magnetic resonance,
k is a predetermined parameter of local coupling topology and of motions between segments of the material,
r is the predetermined ratio of the end-to-end chain length for a portion of chains between topological constraints and the average value of this end-to-end chain length at equilibrium for the material,
and an assessment step (E3) including a comparison of the first parameter (P1) characterizing the elastically active chains (A) and/or of a second parameter (P2), having been determined from the first parameter (P1) characterizing the elastically active chains (A), with at least one prescribed assessment threshold (S) in order to determine that the cable (CB) is at the end of its life when the first parameter (P1) and/or the second parameter (P2) is below the prescribed assessment threshold, wherein the second parameter (P2) includes an elongation ($\varepsilon_r$) at break having been determined from the average molar mass ($M_c$) of the elastically active chains (A).

2. The method according to claim 1, **characterized in that** the first parameter (P1) further comprises the fraction (FCEA) of elastically active chains (A) of the macromolecular network of the elastomeric polymer,
the assessment step (E3) including the comparison (E31) of the fraction (FCEA) of elastically active chains (A) of the macromolecular network of the elastomeric polymer with the prescribed assessment threshold (S), in order to determine that the cable (CB) is at the end of its life when the fraction (FCEA) of elastically active chains (A) of the macromolecular network of the elastomeric polymer is below the prescribed assessment threshold (S).

3. The method according to claim 2, **characterized in that** the measurement step (E2) includes a measurement (E21) of a transverse proton relaxation using proton nuclear magnetic resonance on the insulating sheath (G) in order to determine at least from this measurement (E21) the fraction (FCEA) of elastically active chains (A) of the macromolecular network of the elastomeric polymer.

4. The method according to any one of the preceding claims, **characterized in that**
the assessment step (E3) includes the comparison (E32) of the elongation ($\varepsilon_r$) at break with the prescribed assessment threshold (S) in order to determine that the cable (CB) is at the end of its life when the elongation ($\varepsilon_r$) at break is below the prescribed assessment threshold (S).

5.  The method according to any one of the preceding claims, **characterized in that** it includes a step (E1) of taking a sample of the insulating cable sheath, the step (E2) of measurement using proton nuclear magnetic resonance being carried out on the sample.

6.  The method according to claim 5, **characterized in that** the taken mass of the sample of the insulating sheath (G) of the cable (CB) during the sampling step (E1) is from 20 to 40 mg.

7.  The method according to any one of the preceding claims, including a step (Elbis) of bringing a device for measurement using proton nuclear magnetic resonance into contact with the insulating sheath (G) of the cable (CB), the measurement step (E2) being carried out by the device for measurement using proton nuclear magnetic resonance.

8.  A computer program, including code instructions for implementing the assessment step (E3) of the method according to any one of the preceding claims, when it is implemented on a calculator.

9.  A device for non-destructive testing of an insulating sheath (G) made of a material of at least one elastomeric polymer of a cable (CB),

    wherein the device includes a device (E1, E1bis) for measurement using proton nuclear magnetic resonance on the insulating sheath (G) in order to measure at least a first parameter (P1) characterizing the elastically active chains (A) of the macromolecular network of the elastomeric polymer, the first parameter (P1) comprising the average molar mass ($M_c$) of the elastically active chains (A) of the macromolecular network of the elastomeric polymer,
    the device being able to carry out a measurement (E22) of the increase in proton two-quantum coherences using proton nuclear magnetic resonance on the insulating sheath (G) in order to determine at least from this measurement (E22) the average molar mass ($M_c$) of the elastically active chains (A) of the macromolecular network of the elastomeric polymer,
    wherein the average molar mass $M_c$ of the elastically active chains (A) is calculated from the equation

    $$M_c = (D_{stat}/k).3/5.\ r^2/D_{res}$$

    where
    $D_{stat}$ is a predetermined static dipolar coupling,
    $D_{res}$ is the residual dipolar coupling having been measured by the measurement (E22) of the increase in proton two-quantum coherences using proton nuclear magnetic resonance,
    k is a predetermined parameter of local coupling topology and of motions between segments of the material,
    r is the predetermined ratio of the end-to-end chain length for a portion of chains between topological constraints and the average value of this end-to-end chain length at equilibrium for the material,
    and a calculator enabling to carry out an assessment step (E3) including a comparison of the first parameter (P1) characterizing the elastically active chains (A) and/or of a second parameter (P2), having been determined from the first parameter (P1) characterizing the elastically active chains (A), with at least one prescribed assessment threshold (S) in order to determine that the cable (CB) is at the end of its life when the first parameter (P1) and/or the second parameter (P2) is below the prescribed assessment threshold, wherein the second parameter (P2) includes an elongation ($\varepsilon_r$) at break having been determined from the average molar mass ($M_c$) of the elastically active chains (A).

10. The device according to claim 9, in which the first parameter (P1) further comprises the fraction (FCEA) of elastically active chains (A) of the macromolecular network of the elastomeric polymer,
    the calculator enabling to carry out the assessment step (E3) including the comparison (E31) of the fraction (FCEA) of elastically active chains (A) of the macromolecular network of the elastomeric polymer with the prescribed assessment threshold (S), in order to determine that the cable (CB) is at the end of its life when the fraction (FCEA) of elastically active chains (A) of the macromolecular network of the elastomeric polymer is below the prescribed assessment threshold (S).

11. The device according to claim 9 or 10, in which the device (E1, Elbis) for measurement is able to carry out a measurement (E21) of a transverse proton relaxation using proton nuclear magnetic resonance on the insulating sheath (G) in order to determine at least from this measurement (E21) the fraction (FCEA) of elastically active chains (A) of the macromolecular network of the elastomeric polymer.

12. The device according to any one of the preceding claims, in which
the calculator enables to carry out the assessment step (E3) including the comparison (E32) of the elongation ($\varepsilon_r$) at break with the prescribed assessment threshold (S) in order to determine that the cable (CB) is at the end of its life when the elongation ($\varepsilon_r$) at break is below the prescribed assessment threshold (S).

## FIG. 1

← A,B,C

## FIG. 2

Chaînes élastiquement
actives **A**

**B**

**A**

**B**

**A**

**A**

**B**

**A**

**B**

**A**

**C**

**A**

**A**

**A**

**A**

Chaînes pendantes **B**

**A**

Extractibles **C**

EP 3 797 286 B1

FIG. 3

# FIG. 4

EP 3 797 286 B1

**E2** — **Outils**

**E3**

**Entrées**

**E31** **Sorties**

CB

**E1**

G

Par contact

Micro prélèvement (20-40 mg)

**E1**bis

RMN en laboratoire

RMN portable

Mesures : 30-60 min **E2**

**E21**
Relaxation transverse $^1$H

**E22**
Montée des cohérences à deux quantas $^1$H

Fractions de chaînes élastiquement actives

**FCEA**

**Mc**

$D_{res} \propto 1/M$

**P1**

Relation multi-échelle $\varepsilon_r/M_c$

**S1**

Si atteinte du pourcentage seuil minimale de **chaînes élastiquement actives** $\Rightarrow$ fin de vie des câbles

**S** **P2** **$\varepsilon r$**

Prédiction de l'allongement à rupture (actuellement critère de fin de vie des câbles) : **50% en allongement à rupture**

**S** **E32**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PUBELLIER et al.** *Influence de charges micrométriques sur le vieillissement de composites à matrice polymère*, 28 November 2017
- **BRICE GABRIELLE et al.** Thermal Aging of Interfacial Polymer Chains in Ethylene-Propylene-Diene Terpolymer/Aluminum Hydroxide Composites: Solid-State NMR Study. *JOURNAL OF PHYSICAL CHEMISTRY PART B: CONDENSED MATTER, MATERIALS, SURFACES, INTERFACES & BIOPHYSICAL*, 26 September 2011, vol. 115 (43), ISSN 1520-6106, 12392-12400
- **BEN HASSINE et al.** Time to failure prediction in rubber components subjected to thermal ageing: A combined approach based upon the intrinsic defect concept and the fracture mechanics. *MECHANICS OF MATERIALS*, 01 August 2014, vol. 79, ISSN 0167-6636, 15-24
- **BRICE GABRIELLE et al.** Probing Rubber Cross-Linking Generation of Industrial Polymer Networks at Nanometer Scale. *JOURNAL OF PHYSICAL CHEMISTRY, part B*, 02 June 2016, vol. 120, ISSN 1520-6106, 5581-5589
- **GILLEN K T et al.** Condition monitoring methods applied to degradation of chlorosulfonated polyethylene cable jacketing materials. *POLYMER DEGRADATION AND STABILITY*, 2006, vol. 91 (6), ISSN 0141-3910, 1273-1288